# EUROPEAN PATENT APPLICATION

(11) **EP 4 733 958 A1**
(43) Date of publication of application: **29.04.2026**
(21) Application number: 24832585.4
(22) Date of filing: 21.06.2024
(51) Int. Cl.: G06F 16/953, G06F 40/00

(54) **DATA QUERY METHOD AND APPARATUS, ELECTRONIC DEVICE, STORAGE MEDIUM, AND PROGRAM PRODUCT**

(30) Priority: 25.06.2023 CN 202310752417
(71) Applicant: Lemon Inc., Grand Cayman, KY1-1205 (KY)
(72) Inventor: DAI, Linou, Beijing 100028 (CN)
(74) Representative: Marks & Clerk LLP
(86) International application number: PCT/SG2024/050412
(87) International publication number: WO 2025/005878

(57) **Abstract**

The present disclosure provides a method and an apparatus for data inquiry, an electronic device, a storage medium, and a program product. The method includes: detecting state information of an input zone in an inquiry component in a page, where the state information includes content information of the input zone; determining a current inquiry mode based on the state information; updating an inquiry component style based on the determined inquiry mode; determining a data inquiry result based on the determined inquiry mode and/or the content information in response to receiving an inquiry instruction for the inquiry component; and outputting the data inquiry result. In this way, the inquiry mode can be adjusted in real time according to a state of the input zone in the inquiry component, the inquiry mode is automatically switched, and the corresponding inquiry result is fed back according to the switched inquiry mode, such that the cognitive burden on a user is reduced, data inquiry efficiency of the user is improved, and an inquiry operation flow is simplified.

## Description

This application claims priority to Chinese Application No. 202310752417.2 filed on June. 25, 2023, the disclosures of which are incorporated herein by reference in their entirety.

### FIELD

The present disclosure relates to the technical field of data inquiry, and particularly relates to a method and an apparatus for data inquiry, an electronic device, a storage medium, and a program product.

### BACKGROUND

Currently, inquiry modes of conventional methods for data inquiry are single and cannot be automatically switched, increasing an operation burden on users.

### SUMMARY

In view of that, an objective of the present disclosure is to provide a method and an apparatus for data inquiry, an electronic device, a storage medium, and a program product, so as to automatically switch an inquiry mode.

In order to achieve the objective, the present disclosure provides a method for data inquiry. The method may include:
detecting state information of an input zone in an inquiry component in a page, where the state information includes content information of the input zone;
determining a current inquiry mode based on the state information;
updating an inquiry component style based on the determined inquiry mode;
determining a data inquiry result based on the determined inquiry mode and/or the content information in response to receiving an inquiry instruction for the inquiry component; and
outputting the data inquiry result.

On the basis of the same inventive concept, an illustrative example of the present disclosure further provides an apparatus for data inquiry. The apparatus may include:
a detection module configured to detect state information of an input zone in an inquiry component in a page, where the state information includes content information of the input zone;
an adjustment module configured to determine a current inquiry mode based on the state information;
an updating module configured to update an inquiry component style based on the determined inquiry mode;
a determination module configured to determine a data inquiry result based on the determined inquiry mode and/or the content information in response to receiving an inquiry instruction for the inquiry component; and
an output module configured to output the data inquiry result.

On the basis of the same inventive concept, an illustrative example of the present disclosure further provides an electronic device. The electronic device includes a memory, a processor, and a computer program stored in the memory and executable by the processor. The processor, when executing the computer program, implements the method for data inquiry described above.

On the basis of the same inventive concept, an illustrative example of the present disclosure further provides a non-transient computer-readable storage medium. The non-transient computer-readable storage medium stores a computer instruction. The computer instruction is configured to enable a computer to execute the method for data inquiry described above.

On the basis of the same inventive concept, an illustrative example of the present disclosure further provides a computer program product. The computer program product includes a computer program instruction. The computer program instruction, when run on a computer, enables the computer to execute the method for data inquiry described above.

According to the method and apparatus for data inquiry, the electronic device, the storage medium and the program product provided by the present disclosure as described above, the method may include: detecting the state information of the input zone in the inquiry component in the page, where the state information includes the content information of the input zone; determining the current inquiry mode based on the state information; updating the inquiry component style based on the determined inquiry mode; determining the data inquiry result based on the determined inquiry mode and/or the content information in response to receiving the inquiry instruction for the inquiry component; and outputting the data inquiry result. In this way, the inquiry mode may be adjusted in real time according to a state of the input zone in the inquiry component, the inquiry mode is automatically switched, and the corresponding inquiry result is fed back according to the switched inquiry mode, such that the cognitive burden on a user is reduced, data inquiry efficiency of the user is improved, and an inquiry operation flow is simplified.

### BRIEF DESCRIPTION OF THE DRAWINGS

To describe technical solutions in the present disclosure or the related art more clearly, the accompanying drawings required in description of examples or the related art are introduced briefly. Obviously, the accompanying drawings in the following description show merely the examples of the present disclosure, and those of ordinary skill in the art can still derive other accompanying drawings from these accompanying drawings without creative efforts.
Fig. 1 is a schematic diagram of an application scenario according to an example of the present disclosure;
Fig. 2 is a schematic flow diagram of a method for data inquiry according to an example of the present disclosure;
Fig. 3 is a schematic structural diagram of a first inquiry component according to an example of the present disclosure;
Fig. 4 is a schematic structural diagram of a second inquiry component according to an example of the present disclosure;
Fig. 5 is a schematic structural diagram of a third inquiry component according to an example of the present disclosure;
Fig. 6 is a schematic structural diagram of a fourth inquiry component according to an example of the present disclosure;
Fig. 7 is a schematic structural diagram of a fifth inquiry component according to an example of the present disclosure;
Fig. 8 is a schematic structural diagram of a sixth inquiry component according to an example of the present disclosure;
Fig. 9 is a schematic structural diagram of a seventh inquiry component according to an example of the present disclosure;
Fig. 10 is a schematic structural diagram of an apparatus for data inquiry according to an example of the present disclosure; and
Fig. 11 is a schematic structural diagram of a specific electronic device according to an example of the present disclosure.

### DETAILED DESCRIPTION OF EMBODIMENTS

For making objectives, technical solutions, and advantages of the description clearer, the description will be described in further detail below in conjunction with specific examples with reference to the accompanying drawings.

It may be understood that, before using the technical solution disclosed in each example of the present disclosure, a user has been informed of a category, a scope of usage, a using scenario, etc. of personal information involved in the present disclosure in an appropriate way in accordance with relevant laws and regulations, and user authorization has to be obtained.

It may be understood that, data involved in the technical solution (including, but not limited to, the data itself, and obtaining or using of the data) complies with requirements of corresponding laws, regulations, and relevant regulations.

For making the objectives, the technical solutions, and the advantages of the description clearer, the description will be described in further detail below in conjunction with the specific examples with reference to the accompanying drawings.

It should be noted that technical or scientific terms used in the examples of the present disclosure should have ordinary meanings as understood by those of ordinary skill in the art to which the present disclosure belongs, unless otherwise defined. Terms such as "first," "second," and other similar words used in the examples of the present disclosure do not indicate any order, amount or importance, but are only used to distinguish different components. Terms such as "include," "comprise," "involve" and other similar words indicate that an element, an object or a method step before the term include an element, an object or a method step after the term and its equivalents, without excluding other elements, objects or method steps. Terms such as "connection," "connected" and other similar words are not limited to physical or mechanical connection, but may include electrical connection, which may be direct or indirect. Terms such as "upper," "lower," "left," and "right" are only used to indicate a relative positional relation. After an absolute position of the described object changes, the relative positional relation may also change accordingly.

As described in the background art, currently, inquiry modes of conventional methods for data inquiry in the related art are single and cannot be automatically switched, increasing the operation burden on users.

In the practical cases as stated above, the present disclosure provides a method for data inquiry. The method may include: detecting state information of an input zone in an inquiry component in a page, where the state information includes content information of the input zone; determining a current inquiry mode based on the state information; determining a data inquiry result based on the determined inquiry mode and/or the content information, in response to receiving an inquiry instruction for the inquiry component; and outputting the data inquiry result. In this way, the inquiry mode can be adjusted in real time according to a state of the input zone in the inquiry component, the inquiry mode can be automatically switched, and the corresponding inquiry result is fed back according to the switched inquiry mode, such that the cognitive burden on a user is reduced, a data inquiry efficiency for the user is improved, and an inquiry operation flow is simplified.

After a basic principle of the present disclosure has been introduced, various non-limiting embodiments of the present disclosure are described in detail below.

In some specific application scenarios, the method for data inquiry of the present disclosure may be applied to various platforms or systems involving data inquiry. As an instance, an application scenario may include at least one server and at least one terminal. The server and the terminal may communicate with each other through a network for implementing data transmission. The network may be a wired network or a wireless network, which is not specifically limited by the present disclosure.

The server may be a server that provides various services. Specifically, the server may be configured to provide a background service for an application run on the terminal. Alternatively, in some embodiments, the method for data inquiry provided by the example of the present disclosure may be executed by the server or the terminal. The server may be implemented in hardware or in software. When the server is implemented in hardware, a distributed server cluster including multiple servers may be implemented or a single server may be implemented. When the server is implemented in software, multiple pieces of software or software modules (for instance, software or software modules configured to provide distributed services) or a single piece of software or a single software module may be implemented. The server is not specifically limited by the embodiments of the present disclosure.

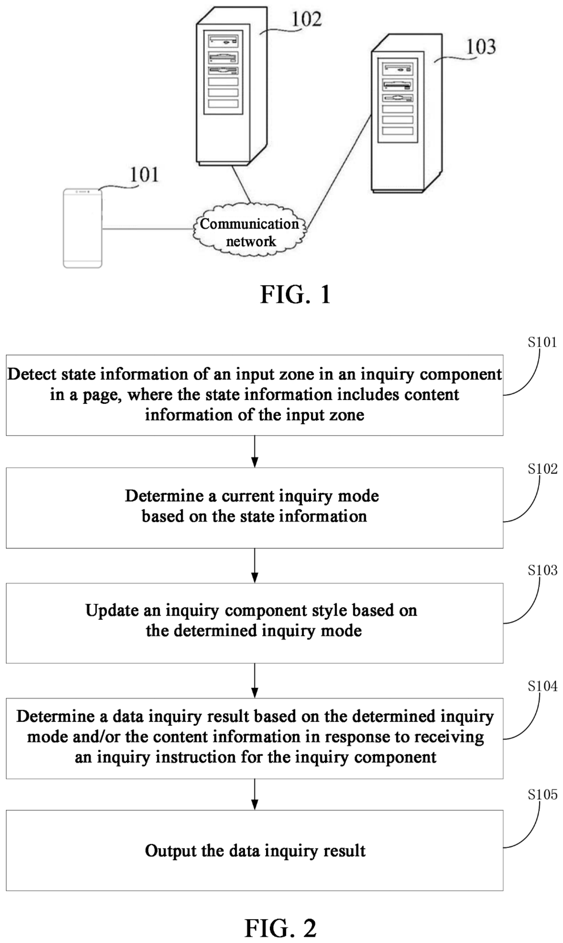

Fig. 1 shows a schematic diagram of an application scenario of a method for data inquiry according to an illustrative example of the present disclosure. The application scenario may include a terminal device 101, a server 102, and a data storage system 103. The terminal device 101, the server 102, and the data storage system 103 may be connected to one another through a wired or wireless communication network. The terminal device 101 may include, but is not limited to, a desktop computer, a mobile phone, a mobile computer, a tablet computer, a media player, a smart wearable device, a personal digital assistant (PDA) or any electronic device(s) capable of achieving the functions described above. Both the server 102 and the data storage system 103 may be independent physical servers, or server clusters or distributed systems including multiple physical servers, or a cloud server that may provide a basic cloud computing service such as a cloud service, a cloud database, cloud computing, a cloud function, cloud storage, a network service, cloud communication, a middleware service, a domain name service, a security service, the content delivery network (CDN), big data and artificial intelligence platforms, etc.

The server 102 is configured to provide a data inquiry service for a user of the terminal device 101. The terminal device 101 is provided with a client in communication with the server 102. The user may obtain data by means of the client. During the data inquiry process, the server 102 may adjust a current inquiry mode according to state information of an input zone in an inquiry component, and determine a data inquiry result according to the adjusted inquiry mode and content information of the input zone. Alternatively, the data inquiry process may be implemented by the client, which is not limited herein.

The data storage system 103 stores various kinds of data related to data inquiry. Both the terminal device 101 and the server 102 may randomly retrieve various kinds of data from the data storage system 103.

The method for data inquiry according to the illustrative embodiments of the present disclosure will be described below in conjunction with the application scene in Fig. 1. It should be noted that, the application scenario is only shown for convenience of understanding of the spirit and principle of the disclosure, and does not limit the embodiments of the present disclosure. On the contrary, the embodiments of the disclosure may be applied to any applicable scenario.

With reference to Fig. 2, which illustrates a schematic flow diagram of a method for data inquiry according to an example of the present disclosure. The method may include the following steps:
S101, state information of an input zone in an inquiry component in a page is detected, where the state information includes content information of the input zone.

In a specific implementation, the state information of the input zone in the inquiry component in the page may be detected firstly. The state information may include the content information of the input zone. Alternatively, detection may be implemented, or alternatively, a specific method for triggering detection may be set as required, which is not limited herein. For instance, detection may be started after an input cursor appears in the input zone. Alternatively, the state information of the input zone may indicate that content is input into the input zone or no content is input into the input zone, or indicate other states, which are not limited herein. It should be noted that, the content information of the input zone may be a specific content input or blank information, which is not limited herein.

S102, a current inquiry mode is determined based on the state information.

In a specific implementation, after the state information of the input zone of the inquiry component is obtained, the current inquiry mode may be determined according to the state information.

In some embodiments, the step of determining the current inquiry mode based on the state information may include the following steps:
determining the current inquiry mode as an exploration mode for full-scale inquiry, in response to determining that the state information indicates no content being input into the input zone; and
determining the current inquiry mode as a search mode for matching inquiry, in response to determining that the state information indicates that content being input into the input zone.

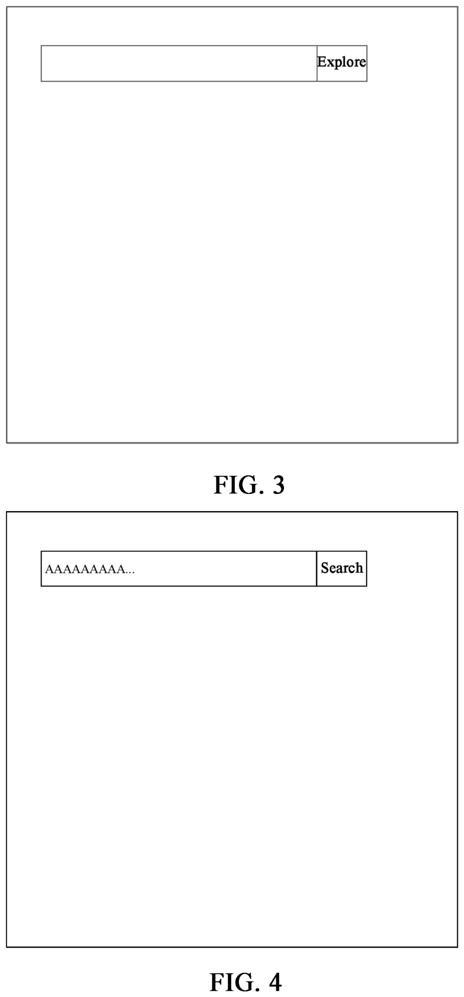

In a specific implementation, the inquiry mode may include the exploration mode for full-scale inquiry and the search mode for matching inquiry. The current inquiry mode is determined as the exploration mode for full-scale inquiry in response to determining that the state information indicates no content being input into the input zone. The current inquiry mode is determined as the search mode for matching inquiry in response to determining that the state information indicates content being input into the input zone. In this way, the exploration mode and the search mode may be automatically switched. With reference to Fig. 3, when no content is input into the input zone (an inquiry box) in the inquiry component, the corresponding inquiry mode is the exploration mode. With reference to Fig. 4, when inquiry content is input into the input zone (an inquiry box) in the inquiry component, the corresponding inquiry mode is the search mode.

In some embodiments, the step of determining the current inquiry mode as the search mode for matching inquiry in response to determining that the state information indicates that content is input into the input zone may include the following steps:
determining an input style of the content information, where the search mode includes accurate search and fuzzy search;
determining the search mode as the accurate search in response to determining that the input style is a multi-line input; and
determining the search mode as the fuzzy search in response to determining that the input style is a single-line input.

In a specific implementation, the search mode may be further divided into the accurate search and the fuzzy search. The accurate search indicates that the matching data inquiry result is completely the same as or coincident with the content information input. The fuzzy search indicates that the matching data inquiry result is at least partially the same as or overlapped with the content information input. In general cases, the fuzzy search belongs to extensive inquiry, and the accurate search belongs to accurate inquiry. A user generally desires to obtain an accurate result when a content input from the user is the multi-line input, that is, the user desires to conduct inquiry on multiple data results at the same time. Therefore, when it is determined that the input style is the multi-line input, the search mode is determined as the accurate search. Meanwhile, a user desires to conduct inquiry on a single data result when a content input from the user is the single-line input. In this case, multiple inquiry results may be fed back to the user, from which the user may select. Therefore, when it is determined that the input style is the single-line input, the search mode is determined as the fuzzy search. Alternatively, multiple results fed back may be sorted as required.

S103, an inquiry component style is updated based on the determined inquiry mode.

In a specific implementation, in order to enable the user to intuitively understand the current inquiry mode, the inquiry component style may be updated according to the determined inquiry mode after the current inquiry mode is determined based on the state information.

Alternatively, with reference to Figs. 3 and 4, the inquiry component style corresponding to the current inquiry mode may be directly represented by words. Alternatively, other display modes may be set as required, so as to show the inquiry component style, which is not limited herein.

S104, a data inquiry result is determined based on the determined inquiry mode and/or the content information, in response to receiving an inquiry instruction for the inquiry component.

In a specific implementation, when the inquiry instruction for the inquiry component is received after the current inquiry mode is determined, the data inquiry result may be determined according to both of the adjusted inquiry mode and the content information, or only according to the determined inquiry mode, or only according to the content information. Alternatively, the inquiry instruction for the inquiry component may be issued by an inquiry control on the inquiry component. With reference to an exploration control in Fig. 3, the inquiry instruction may also be issued by pressing a preset key (for example, a space key) directly after inputting the content into the input zone, which is not limited herein.

In some embodiments, the step of determining the data inquiry result based on the determined inquiry mode and/or the content information may include the following steps:
determining an input style of the content information in response to determining the current inquiry mode as the search mode for matching inquiry;
determining single-line content in the content information corresponding to each input line in response to determining that the input style is the multi-line input, and for each single-line content, determining a data inquiry result matching the single-line content; and
determining the data inquiry result matching the content information in response to determining that the input style is the single-line input.

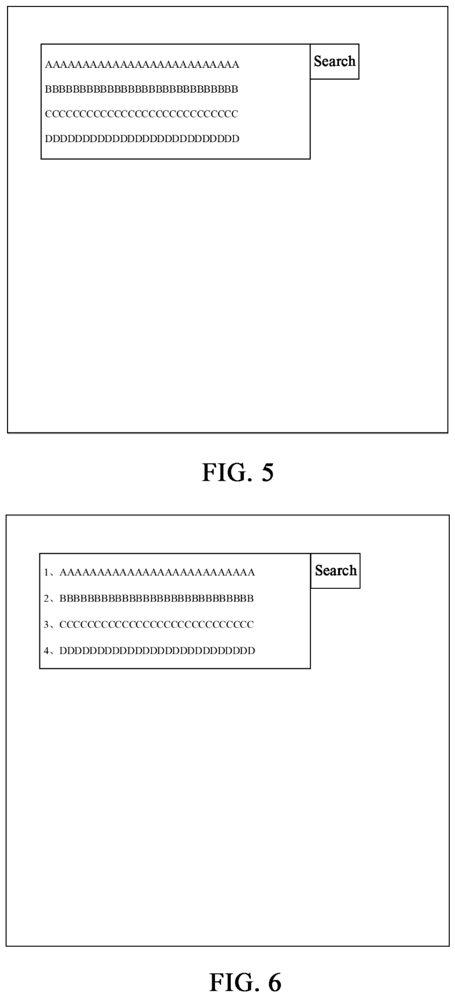

In a specific implementation, when the input style is determined to be the multi-line input, the content information in the input zone includes multiple lines of content corresponding to multiple target results. That is, each line of content corresponds to at least one data inquiry result. Therefore, the single-line content corresponding to each input line in the content information is determined, and for the single-line content, the data inquiry result matching the single-line content is determined. If the input style is determined to be the single-line input, the content information in the input zone may only include the single-line content corresponding to a target result. In this case, the data inquiry result matching the content information is determined. With reference to Fig. 5, the input style of the input zone is the multi-line input (e.g., four-line input), and the matching inquiry result may be determined for each line of corresponding input content.

In some embodiments, after the input style of the content information is determined, the method further includes the following step:
displaying the content information in the input zone line by line, in response to determining that the input style is the multi-line input.

In a specific implementation, in order to enable a user to intuitively determine whether current input is the multi-line input or the single-line input and to accurately know the content corresponding to each input line in the multi-line input, the content information is displayed in the input zone line by line in response to determining that the input style is the multi-line input. Alternatively, displaying of the content information may be conducted line by line according to corresponding content of each input line. With reference to Fig. 5, the input content information is displayed in four lines. Alternatively, in order to improve a display effect, a label may be added ahead of the corresponding content of each input line, with reference to Fig. 6. Meanwhile, a label may be added ahead of the data inquiry result. In this way, the user may better distinguish the data inquiry result matching the corresponding content of each input line.

In some embodiments, the step of determining the data inquiry result based on the determined inquiry mode and/or the content information may include the following step:
determining all of the data in a database corresponding to the inquiry component as the data inquiry result, in response to determining that the current inquiry mode is the exploration mode for full-scale inquiry.

In a specific implementation, all of the data in the database corresponding to the inquiry component may be determined as the data inquiry result in response to determining that the current inquiry mode is the exploration mode for full-scale inquiry. Alternatively, all of the data may be sorted as required, such that a user may quickly find an inquiry target.

In some embodiments, the step of determining the input style of the content information may include the following steps:
determining the input style as the multi-line input, in response to determining that the content information includes multiple entries and a preset instruction is input between adjacent entries; and
determining the input style as the single-line input, in response to determining that the content information includes a single entry or that the content information includes a multiple entries and there is no preset instruction input between adjacent entries.

In a specific implementation, the input style is determined to be the multi-line input in response to determining that the content information includes multiple entries and a preset instruction is input between the adjacent entries. The input style is determined to be the single-line input in response to determining that the content information includes a single entry or that the content information includes multiple entries but there is no preset instruction input between the adjacent entries. Alternatively, the preset instruction may be set as required, which is not limited herein. For instance, the preset instruction may be set to be "shift+Enter" or a space key, and so on.

In some embodiments, the step of determining a preset instruction may include follows:
obtaining all of the input instructions included in a database corresponding to the inquiry component; and
determining the preset instruction based on all of the input instructions, such that the preset instruction does not overlap with all of the input instructions.

In a specific implementation, when determining the preset instruction, all of the input instructions included in the database corresponding to the inquiry component may be obtained, and then the preset instruction may be determined according to all of the input instructions. In this way, the preset instruction does not overlap with all of the input instructions, avoiding a situation where some feature symbols cannot be searched for due to common separators are set to be preset instructions.

In some embodiments, the step of determining the input style of the content information may include the following steps:
determining whether a database corresponding to the inquiry component includes target data matching the content information, in response to determining that the content information includes multiple entries and a preset instruction is input between adjacent entries;
outputting prompt information in response to determining that the database corresponding to the inquiry component includes the target data, where the prompt information is configured to determine whether the current inquiry mode is the single-line input; and
determining the input style as the single-line input, in response to receiving a confirmation instruction for the prompt information.

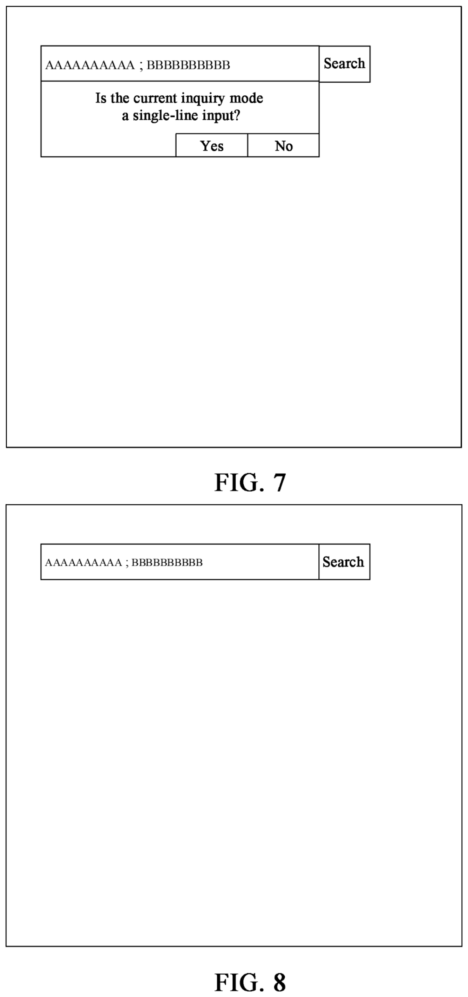

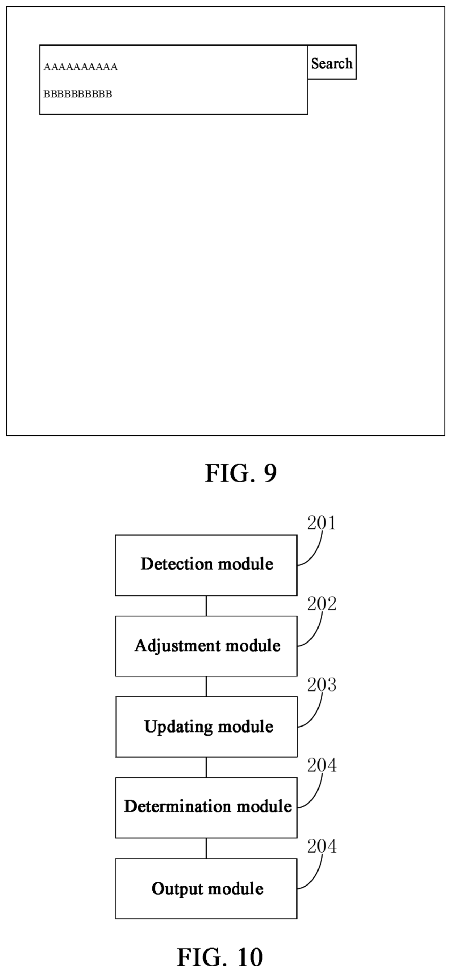

In a specific implementation, the preset instruction needs to be set to not overlap with instructions already included in the database, and setting of the preset instruction needs to facilitate inputting of a user. However, if the database is dynamically updated, the preset instruction can hardly be ensured to not overlap with the instructions already included in the database. Therefore, in some embodiments, whether the database corresponding to the inquiry component includes the target data matching the content information is further determined in response to determining that the content information includes multiple entries and the preset instruction is input between the adjacent entries. If the database does not include the target data, the input style may be directly determined to be multi-line input. If the database includes the target data, the prompt information is output. The prompt information is configured to determine whether the current inquiry mode is the single-line input. The user may determine whether the input style of the currently input content information is the single-line input according to the prompt information, and determine that the input style is the single-line input in response to receiving the confirmation instruction for the prompt information. With reference to Fig. 7, the input content information includes two entries and a symbol ";" exists between the two entries. That is, the preset instruction in this case is the symbol "; ." The prompt information "Is the current inquiry mode single-line input?" is output. If the confirmation instruction initiated by the user is received, that is, the user clicks a "Yes" control in Fig. 7, the input style is determined as the single-line input. With reference to Fig. 8, "AAAAAAAAAA; BBBBBBBBBB" is determined to be the single-line input. If a deny instruction initiated by the user is received, that is, the user clicks a "No" control in Fig. 7, the input style is determined as the multi-line input. With reference to Fig. 9, the content information input is displayed in multiple lines (e.g., two lines, as shown in Fig. 9).

S105, outputting the data inquiry result.

In a specific implementation, after the data inquiry result is determined, the data inquiry result is output. Alternatively, the data inquiry result may be directly output in the page, or may be output to a designated device, which is not limited herein.

According to the method and apparatus for data inquiry, the electronic device, the storage medium and the program product provided by the present disclosure, the method includes the following steps: detecting the state information of the input zone in the inquiry component in the page, where the state information includes content information of the input zone; determining a current inquiry mode based on the state information; updating an inquiry component style based on the determined inquiry mode; determining a data inquiry result based on the determined inquiry mode and/or the content information in response to receiving an inquiry instruction for the inquiry component; and outputting the data inquiry result. In this way, the inquiry mode may be adjusted in real time according to a state of the input zone in the inquiry component, the inquiry mode is automatically switched, and the corresponding inquiry result is fed back according to the switched inquiry mode, such that the cognitive burden on the user is reduced, data inquiry efficiency of the user is improved, and an inquiry operation flow is simplified.

It should be noted that, the method of embodiments of the present disclosure may be executed by a single device, for instance, a computer or a server. Alternatively, the method of embodiments of the present disclosure may be applied to a distributed scenario, and is implemented through mutual cooperation of multiple devices. In the distributed scenario, one of multiple devices may only execute one or more steps of the method of the embodiments of the present disclosure, and the multiple devices may interact with each other so as to complete the method.

It should be noted that the specific examples of the present disclosure are described above. Other examples are within the scope of the appended claims. In some cases, actions or steps recited in the claims may be executed in a different order from those in the examples and still achieve a desired result. In addition, the processes depicted in the drawings do not necessarily require a specific sequence or continuous sequence shown to achieve the desired result. In some embodiments, multitasking and parallel processing are also possible or may be advantageous.

On the basis of the same inventive concept, the present disclosure further provides an apparatus for data inquiry corresponding to the method according to any one of the embodiments.

With reference to Fig. 10, the apparatus for data inquiry may include:
a detection module 201 configured to detect state information of an input zone in an inquiry component in a page, where the state information includes content information of the input zone;
an adjustment module 202 configured to determine a current inquiry mode based on the state information;
an updating module 203 configured to update an inquiry component style based on the determined inquiry mode;
a determination module 204 configured to determine a data inquiry result based on the determined inquiry mode and/or the content information in response to receiving an inquiry instruction for the inquiry component; and
an output module 205 configured to output the data inquiry result.

In some embodiments, the adjustment module is specifically configured to:
determine the current inquiry mode as an exploration mode for full-scale inquiry in response to determining that the state information indicates no content being input into the input zone; and
determine the current inquiry mode as a search mode for matching inquiry in response to determining that the state information indicates content being input into the input zone.

In some embodiments, the adjustment module is specifically configured to:
determine an input style of the content information, where the search mode includes accurate search and fuzzy search;
determine the search mode as the accurate search in response to determining that the input style is a multi-line input; and
determine the search mode as the fuzzy search in response to determining that the input style is a single-line input.

In some embodiments, the determination module is specifically configured to:
determine an input style of the content information in response to determining that the current inquiry mode is the search mode for matching inquiry;
determine a single-line content corresponding to each input line in the content information, in response to determining that the input style is the multi-line input, and for the single-line content, determine the data inquiry result matching the single-line content; and
determine the data inquiry result matching the content information in response to determining that the input style is the single-line input.

In some embodiments, the determination module is specifically configured to:
determine all of data in a database corresponding to the inquiry component to be the data inquiry result, in response to determining that the current inquiry mode is the exploration mode for full-scale inquiry.

In some embodiments, the adjustment module is further specifically configured to:
determine the input style as the multi-line input in response to determining that the content information includes multiple entries and a preset instruction is input between adjacent entries; and
determine the input style as the single-line input in response to determining that the content information includes a single entry or that the content information includes multiple entries and there is no preset instruction input between adjacent entries.

In some embodiments, the apparatus further includes a first display module configured to:
display the content information in the input zone line by line, in response to determining that the input style is the multi-line input.

In some embodiments, the adjustment module is further specifically configured to:
obtain all input instructions included in a database corresponding to the inquiry component; and
determine a preset instruction based on all the input instructions, such that the preset instruction does not overlap with all the input instructions.

In some embodiments, the adjustment module is further specifically configured to:
determine whether a database corresponding to the inquiry component includes target data matching the content information, in response to determining that the content information includes multiple entries and a preset instruction is input between adjacent entries;
output prompt information in response to determining that the database corresponding to the inquiry component includes the target data, where the prompt information is configured to determine whether the current inquiry mode is the single-line input; and
determine the input style to be the single-line input in response to receiving a confirmation instruction for the prompt information.

In some embodiments, the apparatus further includes a second display module configured to:
display an adjustment result after an adjustment made to the inquiry mode in the inquiry component.

The apparatus for data inquiry of the examples is configured to implement the corresponding method for data inquiry of any one of the examples described above, and has advantages of the examples of the corresponding method for data inquiry, which will not be repeated herein.

On the basis of the same inventive concept, the present disclosure further provides an electronic device corresponding to the method according to any one of the examples described above. The electronic device may include a memory, a processor, and a computer program stored in the memory and operable on the processor. The processor implements the method for data inquiry according to any of the embodiments described above when executing the computer program.

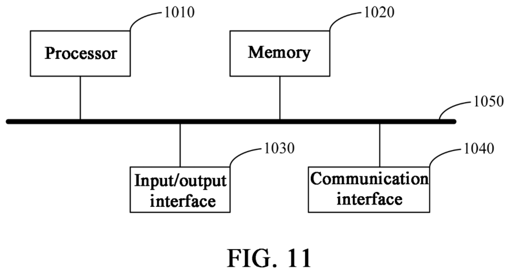

Fig. 11 shows a schematic diagram of a hardware structure of a more specific electronic device according to the example. The device may include: a processor 1010, a memory 1020, an input/output interface 1030, a communication interface 1040, and a bus 1050. The processor 1010, the memory 1020, the input/output interface 1030, and the communication interface 1040 are in a communication connection with one another in the device through the bus 1050.

The processor 1010 may be implemented with a general central processing unit (CPU), a microprocessor, an application specific integrated circuit (ASIC), or one or more integrated circuits, and is configured to execute related programs, such that the technical solution provided by the embodiments of the description is implemented.

The memory 1020 may be implemented in a form of a read only memory (ROM), a random access memory (RAM), a static storage device, a dynamic storage device, etc. The memory 1020 may store an operating system and other applications. When the technical solution provided by the embodiments of the description is implemented by software or firmware, related procedure codes are saved in the memory 1020, called and executed by the processor 1010.

The input/output interface 1030 is configured to be connected to an input/output module, such that information inputting and outputting may be implemented. The input/output module may be configured as a component in the device (not shown in the figure) or may be externally connected to the device, so as to provide a corresponding function. An input device may include a keyboard, a mouse, a touch screen, a microphone, and other various sensors, and so on. An output device may include a display, a speaker, a vibrator, an indicator light, etc.

The communication interface 1040 is configured to be connected to a communication module (not shown in the figure), such that communication interaction between the device and another device may be implemented. The communication module may implement communication in a wired way (through a universal serial bus (USB), a network cable, etc.) or in a wireless way (through a mobile network, WIFI, Bluetooth, etc.).

The bus 1050 may include a path, and transmits information among various components (for instance, the processor 1010, the memory 1020, the input/output interface 1030, and the communication interface 1040) of the device.

It should be noted that, although the device only shows the processor 1010, the memory 1020, the input/output interface 1030, the communication interface 1040, and the bus 1050, the device may further include other components necessary for normal operation in a specific implementation. In addition, those skilled in the art may understand that the device may only involve the components necessary for implementation of the solution of the embodiments of the description, and does not need to involve all the components in the figure.

The electronic device according to embodiments of the present disclosure is configured to implement the corresponding method for data inquiry in any of the embodiments described above and has the advantages of the corresponding method, which will not be repeated herein.

On the basis of the same inventive concept, the disclosure further provides a non-transient computer-readable storage medium corresponding to the method according to any of the embodiments described above. The non-transient computer-readable storage medium stores a computer instruction. The computer instruction is configured to enable a computer to execute the method for data inquiry according to any of the embodiments described above.

The computer-readable medium may be permanent or non-permanent in an example, removable or non-removable, and may store information through any method or technology. The information may be computer-readable instructions, data structures, program modules, or other data. Instances of the computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical memories, a cassette tape, tape or disk memories or other magnetic storage devices, or any other non-transmission media that may be configured to store information capable of being accessed by a computing device.

The computer instruction stored by the storage medium of an example is configured to enable the computer to implement the corresponding method for data inquiry according to any of the embodiments described above and has the advantages of the corresponding method, which will not be repeated herein.

On the basis of the same inventive concept, the present disclosure further provides a computer program product corresponding to the method according to any of the embodiments described above. The computer program product includes a computer program. In some embodiments, the computer program is executed by one or more processors, such that the processor implements the method for data inquiry according to the embodiments described above, and has the advantages of the corresponding method, which will not be repeated herein.

Those of ordinary skill in the art should understand that the discussion of any of the embodiments is only illustrative, and is not intended to imply that the scope of the disclosure (including the claims) is limited to the examples. Considering the idea of the present disclosure, the technical features in the above examples or different examples may also be combined, and the steps may be implemented in any order, and many other variations exist in different aspects of the embodiments of the present disclosure as described above, which are not provided in the details for brevity.

In addition, in order to simplify description and discussion and prevent the embodiments of the present disclosure from being difficult to understand, well-known power/ground connections to integrated circuit (IC) chips and other components may be shown in the provided drawings or not. In addition, the apparatus may be shown in a block diagram form, such that embodiments of the present disclosure are prevented from being difficult to understand, and this also takes into account the fact that the details of the embodiments of the apparatus shown in the block diagram are highly dependent on a platform where the embodiments of the present disclosure are to be implemented (that is, the details should be completely within the understanding range of those skilled in the art). When specific details (for instance, circuits) are set forth to describe the illustrative examples of the disclosure, it is obvious for those skilled in the art that the embodiments of the present disclosure may be implemented without these specific details or with changes in these specific details. Therefore, the description should be regarded as illustrative rather than restrictive.

Although the disclosure is described in connection with the specific examples of the disclosure, many substitutions, modifications, and variations of these embodiments are obvious to those of ordinary skill in the art according to the above description. For instance, other memory frameworks (for instance, a dynamic RAM (DRAM)) may use the discussed embodiments.

Embodiments of the present disclosure are intended to cover all such substitutions, modifications, and variations that fall within that the broadest scope of the appended claims. Therefore, any omission, modification, equivalent substitution, improvement, etc. made within the spirit and principle of the embodiments of the present disclosure should fall within the scope of protection of the disclosure.

## Claims

1. A method of data inquiry, comprising:
detecting state information of an input zone in an inquiry component in a page, wherein the state information comprises content information of the input zone;
determining a current inquiry mode based on the state information;
updating an inquiry component style based on the determined inquiry mode;
determining a data inquiry result based on the determined inquiry mode and/or the content information, in response to receiving an inquiry instruction for the inquiry component; and
outputting the data inquiry result.

2. The method according to claim 1, wherein determining the current inquiry mode based on the state information comprises:
determining the current inquiry mode as an exploration mode for full-scale inquiry in response to determining that the state information indicates no content being input into the input zone; and
determining the current inquiry mode as a search mode for matching inquiry in response to determining that the state information indicates content being input into the input zone.

3. The method according to claim 2, wherein determining the current inquiry mode as the search mode for matching inquiry in response to determining that the state information indicates the content being input into the input zone comprises:
determining an input style of the content information, wherein the search mode comprises accurate search and fuzzy search;
determining the search mode as the accurate search in response to determining that the input style is a multi-line input; and
determining the search mode as the fuzzy search in response to determining that the input style is a single-line input.

4. The method according to claim 2, wherein determining the data inquiry result based on the determined inquiry mode and/or the content information comprises:
determining an input style of the content information in response to determining that the current inquiry mode is the search mode for matching inquiry;
determining single-line content corresponding to each input line in the content information in response to determining that the input style is the multi-line input, and for each single-line content, determining the data inquiry result matching the single-line content; and
determining the data inquiry result matching the content information in response to determining that the input style is the single-line input.

5. The method according to claim 2, wherein determining the data inquiry result based on the determined inquiry mode and/or the content information comprises:
determining all of data in a database corresponding to the inquiry component to be the data inquiry result, in response to determining that the current inquiry mode is the exploration mode for full-scale inquiry.

6. The method according to claim 3 or 4, wherein determining the input style of the content information comprises:
determining the input style as the multi-line input in response to determining that the content information comprises a plurality of entries and a preset instruction is input between adjacent entries; and
determining the input style as the single-line input in response to determining that the content information comprises a single entry or that the content information comprises a plurality of entries and there is no preset instruction is input between adjacent entries.

7. The method according to claim 3 or 4, wherein after determining the input style of the content information, the method further comprises:
displaying the content information in the input zone line by line in response to determining that the input style is the multi-line input.

8. The method according to claim 6, wherein a step of determining the preset instruction comprises:
obtaining all input instructions comprised in a database corresponding to the inquiry component; and
determining the preset instruction based on all the input instructions, such that the preset instruction does not overlap with all the input instructions.

9. The method according to claim 3 or 4, wherein determining the input style of the content information comprises:
determining whether a database corresponding to the inquiry component comprises target data matching the content information, in response to determining that the content information comprises a plurality of entries and a preset instruction is input between adjacent entries;
outputting prompt information in response to determining that the database corresponding to the inquiry component comprises the target data, wherein the prompt information is configured to determine whether the current inquiry mode is the single-line input; and
determining the input style as the single-line input in response to receiving a confirmation instruction for the prompt information.

10. An apparatus for data inquiry, comprising:
a detection module configured to detect state information of an input zone in an inquiry component in a page, wherein the state information comprises content information of the input zone;
an adjustment module configured to determine a current inquiry mode based on the state information;
an updating module configured to update an inquiry component style based on the determined inquiry mode;
a determination module configured to determine a data inquiry result based on the determined inquiry mode and/or the content information in response to receiving an inquiry instruction for the inquiry component; and
an output module configured to output the data inquiry result.

11. An electronic device, comprising a memory, a processor, and a computer program stored in the memory and executable by the processor, wherein the processor implements the method according to any of claims 1-9.

12. A non-transient computer-readable storage medium, storing a computer instruction, wherein the computer instruction is configured to enable a computer to execute the method according to any of claims 1-9.

13. A computer program product, comprising a computer program instruction, wherein the computer program instruction, when run on a computer, enables the computer to execute the method according to any of claims 1-9.
